# EUROPEAN PATENT SPECIFICATION

(11) **EP 0 299 865 B1**
(45) Date of publication and mention of the grant of the patent: **07.01.1998**
(21) Application number: 88401812.8
(22) Date of filing: 12.07.1988
(51) Int. Cl.: C08G 73/10

(54) **Process for preparing low dielectric polyimides**
Verfahren zur Herstellung von wenig dielektrischen Polyimiden
Procédé de préparation de polyimides peu diélectriques

(30) Priority: 15.07.1987 US 73542
(43) Date of publication of application: 18.01.1989
(73) Proprietor: NATIONAL AERONAUTICS AND SPACE ADMINISTRATION, Washington, D.C. 20546 (US)
(72) Inventor: King St. Clair, Anne, Poquoson Virginia 23662 (US); Lee St. Clair, Terry, Poquoson Virginia 23662 (US); Winfree, William Paul, Williamsburg Virginia 23185 (US)
(74) Representative: Des Termes, Monique

(56) References cited:
- EP-A- 0 210 149
- US-A- 4 595 548

## Description

The present invention relates to a process for preparing a low dielectric polyimide film or coating. Linear aromatic systems, esp. linear aromatic polyimides, have been used to exemplify the teachings of the present invention. Several novel polyimides were prepared to verify the present invention.

US-A- 4 595 548 discloses a method for preparing high temperature stable, highly, optically transparent -to-colorless aromatic polyimide film by chemical reaction of an aromatic diamine such as 1,3-bis(aminophenoxybenzene) with an aromatic dianhydride such as 2,2-bis-(3,4-dicarboxyphenyl) hexafluoropropane dianhydride.

High performance polymer film and coating materials are being used increasingly by the electronic circuit industry. As cited by Senturia (Proc. of ACS Polym. Matls. Sci. and Eng., Vol. 55, 385, 1986), polyimides are being exploited for four primary applications in the area of microelectronics: (1) as fabrication aids such as photoresists, planarization layers, and ion implant masks; (2) as passivant overcoats and interlevel insulators; (3) as adhesives, and (4) as substrate components. Of utmost importance for the performance a polymer used for electronic applications is its electrical behavior. To be useful, particularly as a passivant or protective overcoat, the material must be an excellent insulator.

The dielectric constant of commercially available polyimides presently used as state-of-the-art materials for passivants and interlevel dielectrics ranges from approximately 3.2 to 4.0 (depending on frequency and moisture content). The lower limit of 3.2 is obtained on commercial polyimide film DuPont Kapton® H film only after being fully desiccated. Unfortunately, as the film or coating absorbs moisture, the dielectric constant rises, making measurements and operation of electronic devices complicated.

Accordingly, it is a primary object of the present invention to provide a process for preparing low dielectric polyimide film and coating materials.

Another primary object of the present invention is to provide a process for lowering the dielectric constant of aromatic condensation polyimides.

Another object of the present invention is to provide a process for preparing aromatic condensation polyimide films and coatings having a dielectric constant in the range of 2.4 to 3.2.

Another object of the present invention is to provide a process for preparing low dielectric polyimide films and coatings that are resistant to moisture.

Another object of the present invention is the provision of novel polyimides which verify the aforementioned processes and which find special utility in electronic applications as well as in industrial and aerospace applications where high electrical insulation, moisture resistance, mechanical strength and thermal stability are required.

These objects are accomplished by the method for preparing a low dielectric, high-temperature stable linear aromatic polyimide film and the aromatic polyimide defined in the appended claims.

This method comprises :
a) chemically reacting equimolar quantities of an aromatic diamine reactant and an aromatic dianhydride reactant in a solvent medium to form a high molecular weight polyamic acid solution ;
b) minimizing electronic interactions between polymer chains of the high molecular weight polyamic acid by means selected from the group consisting of :
   i) incorporating separator or linking groups selected from the group consisting of ether, sulfide and carbonyl groups in at least one of the aromatic diamine or aromatic dianhydride reactants prior to employment thereof in said method,
   ii) producing physical kinks or dissymmetry in the polymer chains of the high molecular weight polyamic acid by utilizing a meta-linked aromatic diamine as the aromatic diamine reactant, and
   iii)incorporating a bulky group selected from the group consisting of -CF₃ and -SO₂ in at least one of the aromatic diamine or aromatic dianhydride reactants prior to employment thereof in said method, in order to hinder interaction between the polymer chains ;
c) incorporating one or more fluorine atoms in both of the aromatic diamine and aromatic dianhydride reactants in the form of -CF₃ or -C(CF₃)₂ groups or both prior to employment thereof in the present method;
d) preparing a film of the resulting high molecular weight polyamic solution or a solution of the corresponding polyimide in a solvent ; and
e) thermally curing the film at a temperature up to about 300°C for at least one hour to remove solvent and yield a low dielectric, high-temperature linear aromatic polyimide film.

Preparation of low dielectric polyimide films and coatings according to the present invention involves the convencional reaction of an aromatic diamine in a solvent with an aromatic dianhydride according to the following: 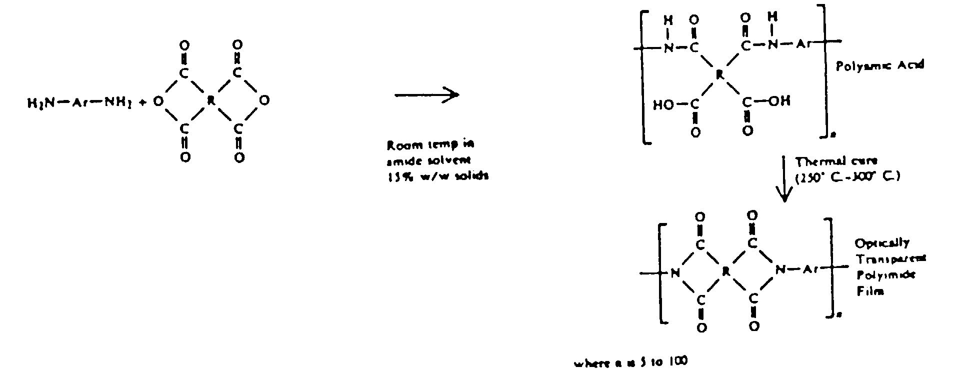 where R is a fluorinated group such as 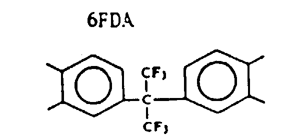 and where Ar is a fluorinated group such as

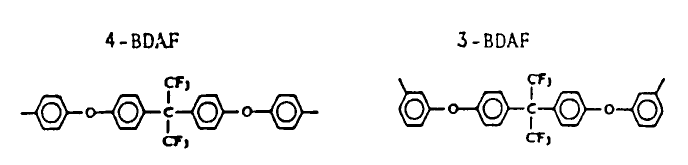

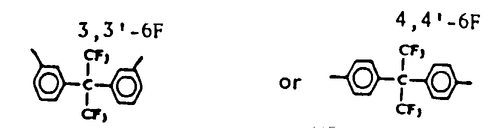

In the above reaction, a polymer grade aromatic diamine is dissolved in a dry amide type solvent such as dimethylacetamide (DMAc). A polymer grade aromatic dianhydride is then added to the diamine solution at room temperature to form a polyamic acid. This resin is then spread onto a glass plate to form a film using a doctor blade with specified blade gap. The polyamic acid film is then thermally converted to the polyimide by heating to 250° - 300°C.

Another method for preparing a low dielectric polyimide film or coating of the present invention is to dissolve polyimide powder in a solvent and use this solution for film-casting or for spray-coating. The polyimide powder is prepared by chemically imidizing the polyamic acid in solution (preparation of the polyamic acid is described above). The polyimide is then precipitated by pouring the imidized polymer dissolved in amide solvent into a rapidly stirred nonsolvent such as water. The resulting polyimide powder can then be dried and stored indefinitely. When ready for application, the polyimide powder is redissolved in a solvent of choice and either cast into a film or spray-coated onto a substrate.

Tables I, II, III, IV and V hereinafter illustrate the dielectric properties of various polyimides. In these tables the polyimides which are outside the scope of the claims are marked with an asterisk. These polyimides are examples useful for understanding the invention. These polyimides are prepared from dianhydride and diamine reactants which are not both fluorinated. The non fluorinated groups R and Ar used for non fluorinated dianhydride and diamine reactants are
R is 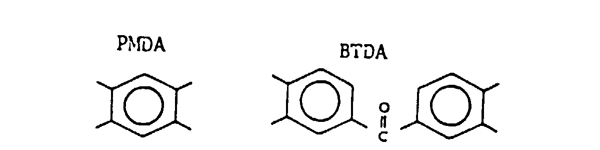 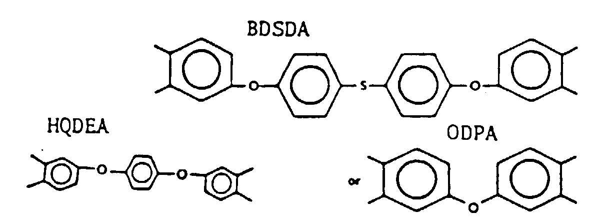
Ar is 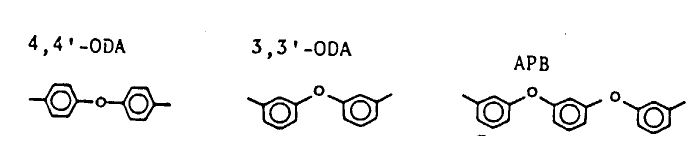 or

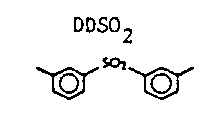

The reduction of electronic interactions between polymer chains to produce low dielectric polyimides by adding separator or linking groups to the dianhydride is illustrated in Table I. The dielectric constants were measured at 10 GHz at room temperature and approximately 35% relative humidity. Commercial Kapton® H film which is prepared from PMDA and 4,4'-ODA (chemical structure shown in Table I) was also used as a basis for comparison as it is widely used by the electronics industry as a film and coating material.

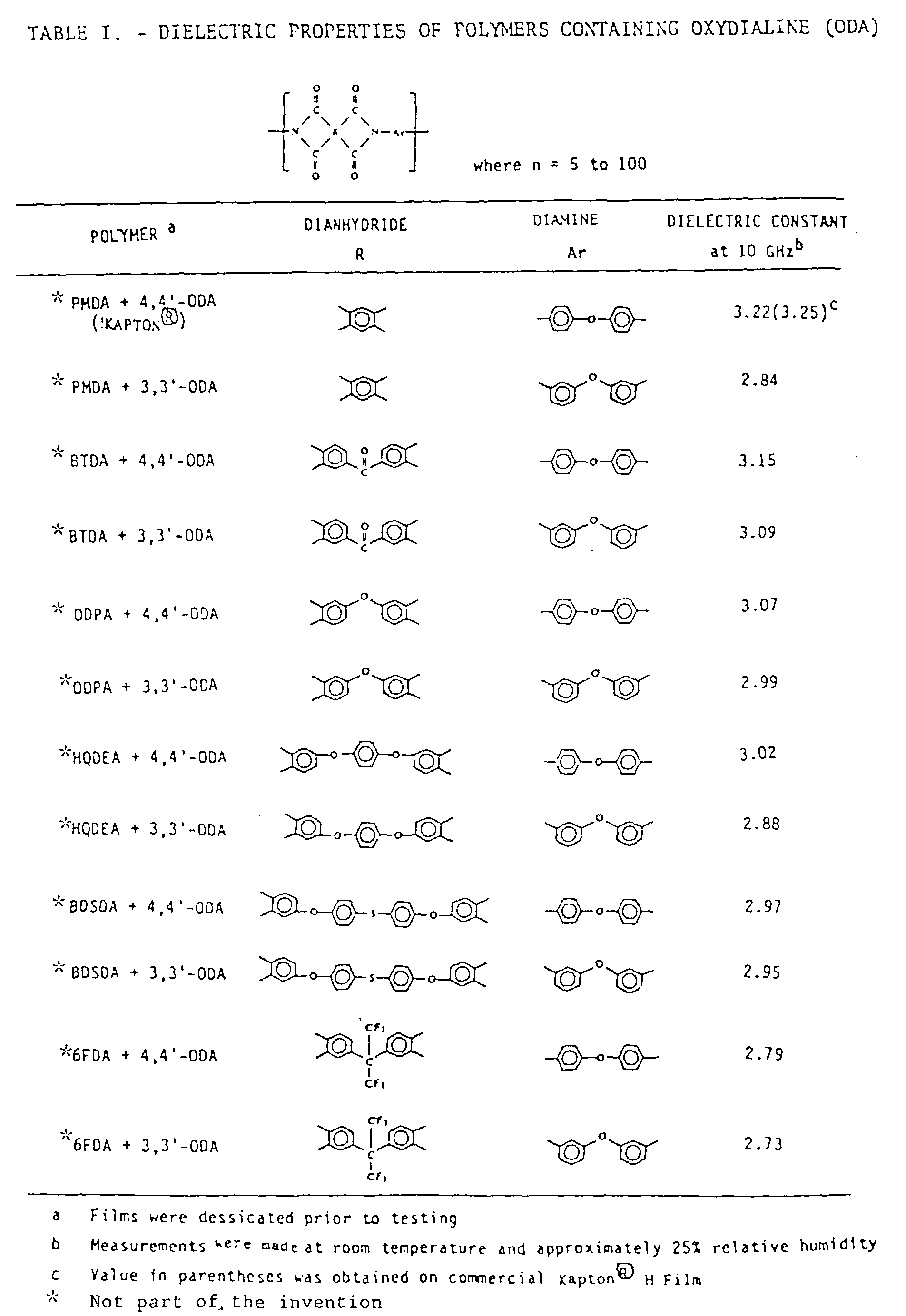

Incorporation of a linking group or atom between two phenyl groups in the dianhydrides BTDA and ODPA reduces the acidity of these dianhydrides relative to PMDA, causing a reduction in overall chain-chain electronic interaction. The dielectric constants of 3.15 for BTDA + 4,4'-ODA and 3.07 for ODPA + 4,4'-ODA are lower than for PMDA + 4,4'-ODA (3.22) prepared in this laboratory or commercial Kapton (3.25), which is reported to have a high degree of electronic interaction between chains. The addition of another phenoxy group to the dianhydride lowers the dielectric constant of HQDEA + 4,4'-ODA even further (3.02). Incorporation of both -O- and -S- between phenyl rings lowers the dielectric constant still further as in the case of BDSDA + 4,4'-ODA (2.97). Although the above mentioned -O- and -S- atoms and -C=O group were used to separate charge and reduce the acidity of the dianhydride in the present invention, other groups could foreseeably be employed.

Incorporation of physical "kinks" or dissymmetry into the polymer chain to reduce electronic interactions between chains and lower the dielectric constant is also illustrated in Table I. The many examples of polymers prepared with ODA in this table show that incorporation of meta-oriented (3,3'-) diamines into the molecular structure causes a reduction in the dielectric constant. Similar results are shown in Table II where the last polymer in the table, 6FDA + 3-BDAF, prepared with a meta-oriented diamine displays a dielectric constant of 2.40 compared to 2.50 for its paraoriented counterpart. Although ODA and BDAF were used in the specific examples to show the effect of meta-orientation upon polyimide dielectric constant, other meta-oriented diamines could foreseeably produce the same results when compared to their all paraoriented (4,4'-) counterparts. Although meta isomerism was used in the present invention to produce structural "kinks" or dissymmetry in the polymer chain and thus lower the dielectric constant of the resulting polyimide, other forms of isomerism could foreseeably produce similar results. Other forms of isomerism in the aromatic diamine might include any combination of ortho, meta or para isomerism so as to reduce symmetry any discourage electronic interaction between chains.

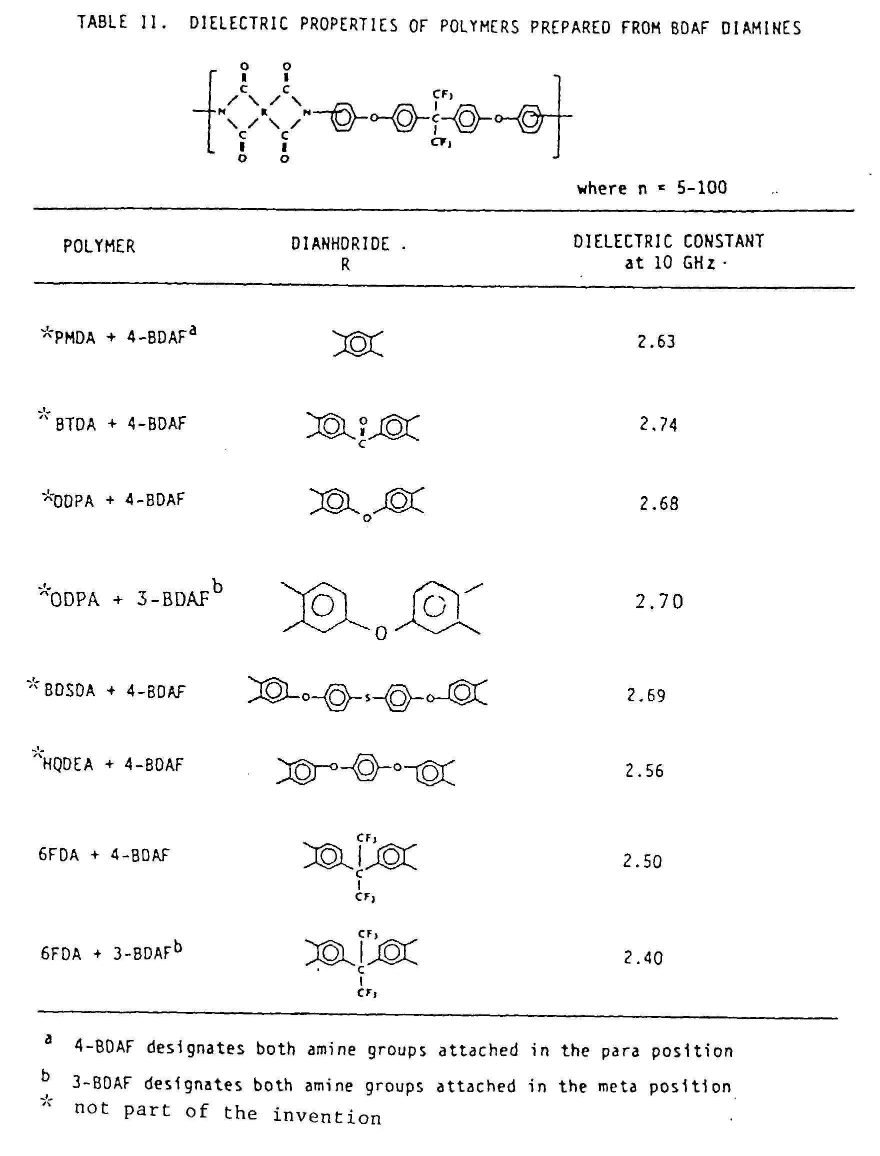

Electronic interactions between polymer chains are also reduced by incorporation of bulky groups along the backbone of the polyimide which sterically hinder these interactions. Bulky groups used in the present invention are -CF₃ groups in the form of -C(CF₃)₂. It is evident in Tables I, II and III that incorporation of such a group in the dianhydride and diamine produces polymers with relatively low dielectric constants. However, the bulky groups used in the present invention also contain fluorine atoms which satisfy the second condition cited previously for preparing a low dielectric polyimide. Table III lists the dielectric constants for a series of polymers prepared from 6FDA containing the bulky fluorinated -C(CF₃)₂ group. The dielectric constant is at a minimum when -CF₃ groups are placed in both the dianhydride and diamine portions of the polymer.

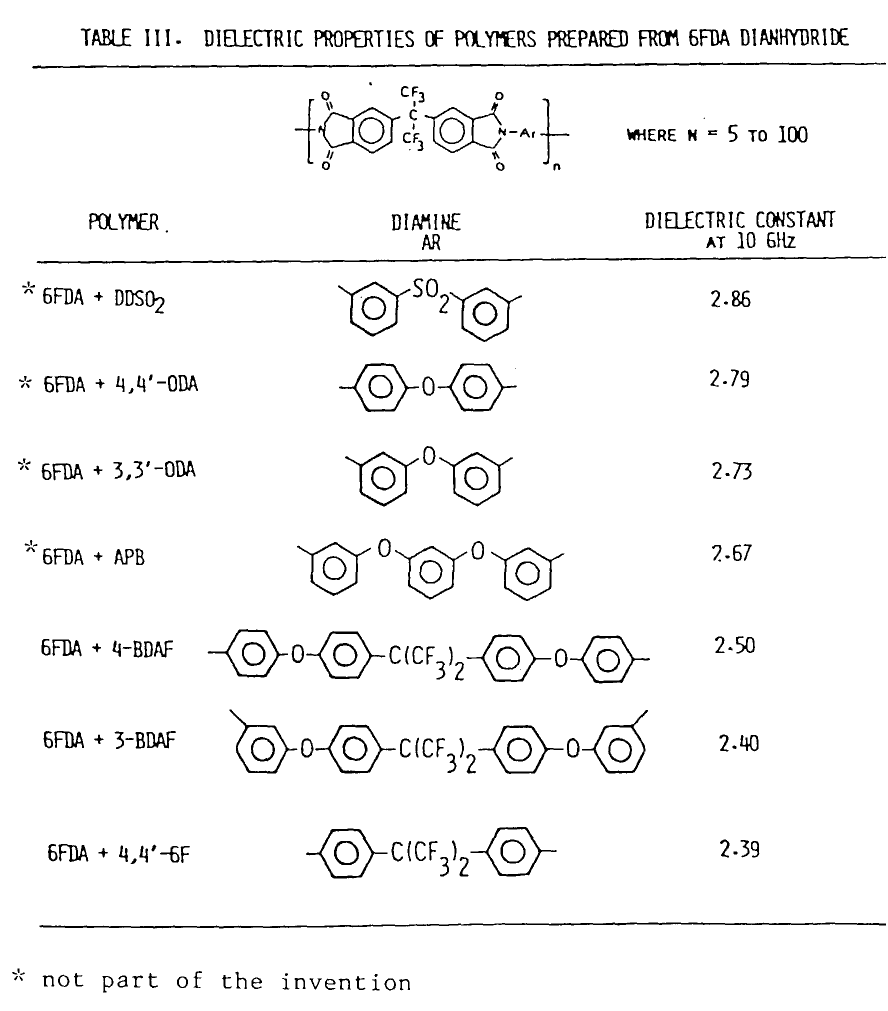

The incorporation of bulky groups such as -CF₃ or -SO₂ into a linear aromatic polyimide to reduce electronic interactions between chains has been previously reported by St. Clair and St. Clair (U.S. Patent 4,603,061). This method was used to reduce charge transfer between chains and thereby produce optically transparent films. The most optically transparent or colorless film produced according to this patent was prepared from 6F (herein referred to as 6FDA) and DDSO₂. Although the use of the bulky -SO₂ group was entirely successful at reducing charge transfer between chains to the extent of producing a water-white/colorless film, it has not been equally successful at lowering the dielectric constant.

It is not, therefore, obvious to those skilled in the art, that reduction of electronic interactions between chains by incorporation of bulky groups as taught by St. Clair and St. Clair in the above-stated patent should lower the dielectric constant or make a polyimide more insulative based on the fact that this procedure produced aromatic polyimides with improved transparency. It is shown in the present invention that for maximum insulative capacity, the aromatic polyimide must contain fluorine atoms in the polymer backbone. For example, as shown in Table IV substitution of a bulky -SO₂ group for -O- in the aromatic ODA diamine of Kapton® reduces chain-chain interaction making the PMDA + DDSO₂ polymers more transparent (pale orange). The dielectric constant remains equal to that of the Kapton, however, Incorporation of the 6FDA fluorine-containing dianhydride into the polymer to replace PMDA lowers the dielectric constant to 2.86. Substitution of 4-BDAF for ODA in the Kapton polymer produces a significant lowering of the dielectric constant to 2.63. When both monomers contain -CF₃- groups the dielectric constant is at a minimum (2.4 to 2.5).

The most successful method for lowering the dielectric constant of an aromatic polyimide is to combine both conditions: (1) the reduction of chain-chain interactions and (2) the incorporation of fluorine in the polymer backbone. The best example of this success herein is that of 6FDA + 3-BDAF. This polymer has a minimal dielectric constant of 2.40 at 10 GHz. Both monomers contain fluorine atoms. Electronic interactions between polymer chains should be at a minimum due to -O- separator atoms in the BDAF diamine, meta isomerism in the 3-BDAF diamine, and steric hindrance due to bulky -CF3 units in both monomers.

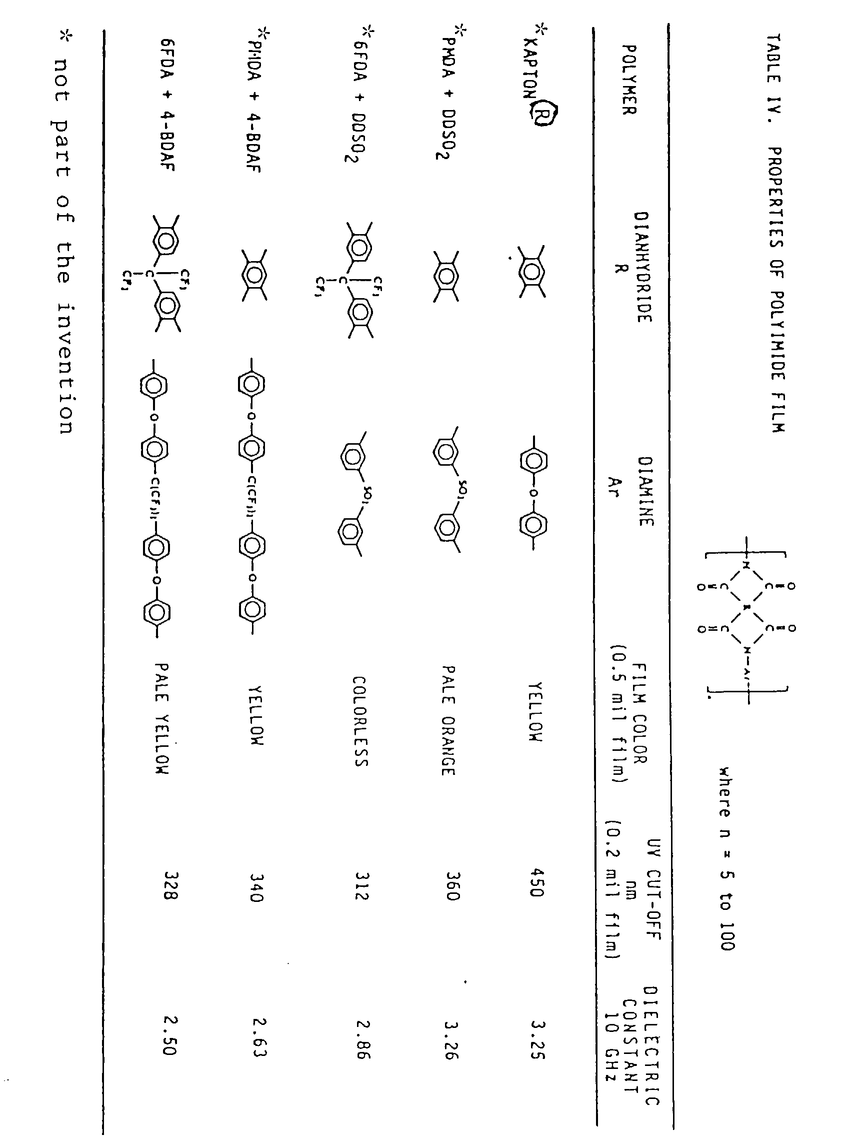

The incorporation of the -CF₃ fluorinated alkyl groups into polyimides according to this invention produces low dielectric materials which show unusually excellent resistance to moisture, exhibiting properties approaching those of polytetrafluoroethylene. As stated earlier, Kapton® commercial polyimide film absorbs moisture causing the dielectric constant thereof to increase. As shown in Table V, the dielectric constant of Kapton® at 1 MHz rose from 3.38 at 30-35% RH to 3.85 at 100% RH (an increase of approximately 14%). The dielectric constants of polymers of the present invention containing -CF₃ groups, however, were significantly more stable when the films were subjected to increasing humidity. The dielectric constant of 6F + 4-BDAF changed only 1% upon subjection to 100% humidity. Dielectric constants at 100% RH for all films were measured after soaking the films in distilled water for 24 hours.

Linear aromatic polyimides were used herein as exemplary systems to illustrate the teachings of the present invention. All of these polymers used as examples contain the five-membered imide group 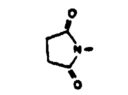 and are therefore so-designated as polyimides. The "imide" portion of these systems, however, is not considered to contribute to lowering the polymer dielectric constant by the teachings of the present invention. By the doctrine herein, only conditions selected from the following must be met to produce a low dielectric aromatic polymer:
(1) reduction of electronic interactions between polymer chains by incorporation of separator or linking groups such as ether, sulfide or carbonyl into the polymer molecular structure; incorporation of physical links or dissymmetry into the polymer backbone; incorporation of bulky groups such as -CF₃ or -SO₂ to hinder chain interaction; and
(2) incorporation of fluorine atoms into the polymer molecular structure by use of -CF₃ and/or -C(CF₃)₂ groups.
Therefore, the dielectric constant of any aromatic polymer could foreseeably be lowered by using this process. When all of the above conditions are satisfied, the dielectric constant of the aromatic polymer is minimized.

Although aromatic polyimide films and film coatings were used as physical samples to demonstrate the teachings of the present invention, other forms of the subject polymer could foreseeably be used. The dielectric constant of a polymer is by nature an inherent physical or intrinsic property. Therefore powders, moldings, fibers, flakes or other forms of a polymer could be used to demonstrate the teachings herein. Films were the preferred form for use in measurement of the dielectric constant because this form of the polymer allows for full consolidation. In addition, it is possible to make dielectric measurements on polymers in film-form that are both highly accurate and reproducible.

**TABLE V**

| DIELECTRIC PROPERTIES OF POLYIMIDE FILMS MEASURED AT VARIOUS RELATIVE HUMIDITIES (RH) | | | |
|---|---|---|---|
| POLYMER | DIELECTRIC CONSTANT AT 1 MHz | | |
| | 30-35% RH | 47-50% RH | 100% RH |
| *Kapton® | 3.38 | 3.44 | 3.85 |
| 6F + 4-BDAF | 2.77 | 2.81 | 2.80 |
| *ODPA + 4-BDAF | 3.08 | 3.12 | 3.17 |
| *PMDA + 4-BDAF | 2.93 | 2.97 | 3.01 |
| *BTDA + 4-BDAF | 3.03 | 3.09 | 3.15 |
| *BDSDA + 4-BDAF | 3.08 | 3.14 | 3.16 |

| | | | |
|---|---|---|---|
| * not part of the invention | | | |

### SPECIFIC EXAMPLES

### Example I

To a dry vessel was added 1.0369g of polymer grade (recrystallized) 2.2-bis[4(4-aminophenoxyjphenyl]hexafluoropropane (4-BDAF)(m.pt. 1.62°C) and 10.9g dry dimethylacetamide (DMAc). After the diamine had dissolved, 0.8885g of polymer grade (recrystallized) 2,2-bis(3,4-dicarboxyphenyl)-hexafluoropropane dianhydride (6FDA)(m.pt. 241°C) was added at once to the stirred diamine/DMAc mixture. Stirring was continued until all dianhydride had dissolved and a solution inherent viscosity of 1.0 dl/g at 35°C was obtained. The resulting polyamic acid solution (15% solids by weight) was refrigerated until used for film casting.

A film of the 6FDA + 4-BDAF polyamic acid was prepared by casting the resin onto a soda-lime glass plate in a dust-free chamber at a relative humidity of 10%. The solution was spread by an aluminum blade with the gap set so as to ensure a final film thickness of 1.0 mil. The polyamic acid film was thermally converted to the corresponding polyimide by heating in a forced air oven for one hour each at 100°, 200°, and 300°C. The resulting film was removed from the glass plate after cooling to room temperature by immersion in warm water. The dielectric constant of this film measured under ambient conditions was 2.77 at 1 MHz and 2.50 at 10GHz. The film was found to be essentially resistant to moisture. The dielectric constant of 6FDA + 4-BDAF was found to vary no more than 1% after the film was soaked for 24 hours in distilled water.

### Example II

Using the same method and conditions as in Example I of the present invention, equimolar amounts of 2,2-bis[4(3-aminophenoxy)phenyl]-hexafluoropropane (3-BDAF)(m.pt. 133°C) and 6FDA were dissolved in DMAc to form a polyamic acid resin having an inherent viscosity of 0.53 dl/g. The resulting 6FDA + 3-BDAF polyimide film had a dielectric constant of 2.40 at 10 GHz. Like that of the 6FDA +4-BDAF film of Example I, the dielectric constant of 6FDA +3-BDAF changed very little when the film was exposed to 100% relative humidity.

### Example III

By the same method and conditions described in Example I of the present invention, equimolar amounts of 2,2-bis(4-aminophenyl)hexafluoropropane (4,4'-6F)(m.pt. 194°C) and 6FDA were dissolved in DMAc to form a polyamic acid having an inherent viscosity of 1.0 dl/g. The resulting polyimide had a dielectric constant of 2.39 at 10 GHz.

### Example IV

By the same method and conditions described in Example I of the present invention, equimolar amounts of 2,2-bis(3-aminophenyl)hexafluoropropane (3,3'-6F)(m.pt. 79°C) and 6FDA were dissolved in DMAc to form a polyamic acid having an inherent viscosity of 0.60 dl/g. The resulting polyimide film had a dielectric constant of 2.50 at 10 GHz.

### Example V

By the same method and conditions described in Example I of the present invention, a viscous polyamic acid resin of 6F + 4-BDAF was prepared; and an imide powder of this formulation was prepared by chemically imidizing the polyamic acid using pyridine/acetic anhydride as is well known in the art. The powder was precipitated by pouring the imidized polymer/DMAc solution into rapidly stirred distilled water. The resulting white powder was dried at 60°C for 4 hours and at 200°C for 2 hours. A film was prepared according to the procedure described in Example I by casting a solution of the 6F + 4-BDAF powder dissolved in chloroform. The resulting film was of good quality and had a dielectric constant of 2.55 at 10 GHz.

## Claims

1. A method for preparing a low dielectric, high-temperature stable linear aromatic polyimide film which method comprises :
a) chemically reacting equimolar quantities of an aromatic diamine reactant and an aromatic dianhydride reactant in a solvent medium to form a high molecular weight polyamic acid solution ;
b) minimizing electronic interactions between polymer chains of the high molecular weight polyamic acid by means selected from the group consisting of:
i) incorporating separator or linking groups selected from the group consisting of ether, sulfide and carbonyl groups in at least one of the aromatic diamine or aromatic dianhydride reactants prior to employment thereof in said method,
ii) producing physical kinks or dissymmetry in the polymer chains of the high molecular weight polyamic acid by utilizing a meta-linked aromatic diamine as the aromatic diamine reactant, and
iii) incorporating a bulky group selected from the group consisting of -CF₃ and -SO₂ in at least one of the aromatic diamine or aromatic dianhydride reactants prior to employment thereof in said method, in order to hinder interaction between the polymer chains ;
c) incorporating one or more fluorine atoms in both of the aromatic diamine and aromatic dianhydride reactants in the form of -CF₃ or -C(CF₃)₂ groups or both prior to employment thereof in the present method ;
d) preparing a film of the resulting high molecular weight polyamic solution or a solution of the corresponding polyimide in a solvent ; and
e) thermally curing the film at a temperature up to about 300°C for at least one hour to remove solvent and yield a low dielectric, high-temperature linear aromatic polyimide film.

2. The method of claim 1, wherein the high molecular weight polyamic acid solution is applied onto a surface, and the applied film layer is thermally cured in the temperature range of 250°C to 300°C for at least one hour.

3. The method of claim 1, wherein the aromatic diamine is selected from the group consisting of :
2,2-bis(4(3-aminophenoxy)phenyl) hexafluoropropane,
2,2-bis(4(4-aminophenoxy)phenyl) hexafluoropropane,
2,2-bis(4-aminophenyl) hexafluoropropane, and
2,2-bis(3-aminophenyl) hexafluoropropane.

4. The method of claim 1, wherein the aromatic dianhydride is 2,2-bis(3,4-dicarboxylphenyl) hexafluoropropane dianhydride.

5. The method of claim 1, wherein the solvent medium is selected from the group consisting of :
N,N-dimethylacetamide,
N,N-dimethylformamide,
N-methyl-2-pyrrolidone, and
dimethylsulfoxide.

6. The method of claim 1, wherein :
the resulting high molecular weight polyamic acid solution is chemically imidized to produce a precipitate of the corresponding polyimide ;
the corresponding polyimide is then dissolved in a solvent and a film layer prepared from the solution of the polyimide in the solvent is applied onto a surface ; and
the film layer is subsequently heated at a temperature range of 20°C - 300°C to remove the solvent and produce a high-temperature stable, low dielectric polyimide film.

7. The method of claim 6, wherein the high molecular weight polyamic acid solution is chemically imidized by a process which comprises adding a solution of acetic anhydride and pyridine in an organic solvent to the high molecular weight polyamic acid solution.

8. The method of claim 6, wherein the solvent employed to dissolve the polyimide is selected from the group consisting of :
N,N-dimethylacetamide,
N,N-dimethylformamide,
N-methyl-2pyrrolidone,
dimethylsulfoxide,
chlorinated solvents,
tetrahydrofuran
m-cresol,
methylethyl keton,
methylisobutyl ketone, and
bis(2-methoxyethyl)ether.

9. The method of claim 6, wherein the polyimide precipitate is wash-blended in freshly distilled water and thoroughly dried at 60°C and for 2 hours at 200°C prior to being dissolved in a solvent.

10. A high-temperature stable, insulative aromatic polyimide having a dielectric constant in the range of 2.4 to 3.2, which is produced by the method according to claim 1.

11. The polyimide film of claim 10, which does not lose its insulative properties when subjected to large changes in humidity.

12. A low dielectric polymer comprising a linear aromatic polyimide formed as the reaction product of 2,2-bis(3,4-dicarboxyphenyl) hexafluoro-propane dianhydride, with the aromatic diamine 2,2-bis(4(3-aminophenoxy)phenyl) hexafluoro-propane.

## Patentansprüche

1. Verfahren zum Herstellen eines wenig dielektrischen hochtemperaturbeständigen linearen aromatischen Polyimidfilms, wobei das Verfahren umfaßt:
a) chemisches Umsetzen von äquimolaren Mengen eines aromatischen Diamin-Reaktionspartners und eines aromatischen Dianhydrid-Reaktionspartners in einem Lösungsmittelmedium, um eine Lösung einer Polyamidsäure mit hohem Molekulargewicht zu bilden;
b) Minimieren der elektronischen Wechselwirkungen zwischen Polymerketten der Polyamidsäure mit hohem Molekulargewicht durch Mittel, die ausgewählt sind aus der Gruppe bestehend aus:
i) Einbauen von Trenn- oder Verknüpfungsgruppen, ausgewählt aus der Gruppe bestehend aus Ether-, Sulfid- und Carbonylgruppen in mindestens einen der aromatischen Diamin- oder aromatischen Dianhydrid-Reaktionspartner vor deren Verwendung in dem Verfahren,
ii) Erzeugen von physikalischen Knicken oder Dissymmetrie in den Polymerketten der Polyamidsäure mit hohem Molekulargewicht durch Verwenden eines meta-verknüpften aromatischen Diamins als aromatischen Diamin-Reaktionspartner, und
iii) Einbauen einer sperrigen Gruppe, ausgewählt aus der Gruppe bestehend aus -CF₃ und -SO₂, in mindestens einen der aromatischen Diamin- oder aromatischen Dianhydrid-Reaktionspartner vor dessen Einsatz in dem Verfahren, um die Wechselwirkung zwischen den Polymerketten zu behindern;
c) Einbauen von einem oder mehreren Fluoratomen sowohl in die aromatischen Diamin- als auch die aromatischen Dianhydrid-Reaktionspartner in Form von -CF₃ oder -C(CF₃)₂-Gruppen oder beiden vor deren Einsatz in dem vorliegenden Verfahren;
d) Herstellen eines Films aus der sich daraus ergebenden Lösung der Polyamidsäure mit hohem Molekulargewicht oder einer Lösung des entsprechenden Polyimids in einem Lösungsmittel; und
e) thermisches Härten des Films bei einer Temperatur bis ungefähr 300°C während eines Zeitraums von mindestens einer Stunde, um das Lösungsmittel zu entfernen und einen wenig dielektrischen hochtemperaturbeständigen linearen aromatischen Polyimidfilm zu ergeben.

2. Verfahren nach Anspruch 1, worin die Lösung der Polyamidsäure mit hohem Molekulargewicht auf eine Oberfläche aufgetragen wird und die aufgetragene Filmschicht in dem Temperaturbereich von 250°C bis 300°C während eines Zeitraums von mindestens einer Stunde thermisch gehärtet wird.

3. Verfahren nach Anspruch 1, worin das aromatische Diamin ausgewählt ist aus der Gruppe bestehend aus:
2,2-Bis(4(3-aminophenoxy)phenyl)hexafluorpropan,
2,2-Bis(4(4-aminophenoxy)phenyl)hexafluorpropan,
2,2-Bis(4-aminophenyl)hexafluorpropan, und
2,2-Bis(3-aminophenyl)hexafluorpropan.

4. Verfahren nach Anspruch 1, worin das aromatische Dianhydrid 2,2-Bis(3,4-dicarboxylphenyl)hexafluorpropandianhydrid ist.

5. Verfahren nach Anspruch 1, worin das Lösungsmittelmedium ausgewählt ist aus der Gruppe bestehend aus:
N,N-Dimethylacetamid,
N,N-Dimethylformamid,
N-Methyl-2-pyrrolidon, und
Dimethylsulfoxid.

6. Verfahren nach Anspruch 1, worin:
die resultierende Lösung der Polyamidsäure mit hohem Molekulargewicht chemisch imidisiert wird, um einen Niederschlag des entsprechenden Polyimids zu erzeugen;
das entsprechende Polyimid dann in einem Lösungsmittel aufgelöst wird und eine aus der Lösung des Polyimids in dem Lösungsmittel hergestellte Filmschicht auf eine Oberfläche aufgetragen wird; und
die Filmschicht anschließend auf einen Temperaturbereich von 20°C - 300°C erwärmt wird, um das Lösungsmittel zu entfernen und einen hochtemperaturbeständigen wenig dielektrischen Polyimidfilm zu erzeugen.

7. Verfahren nach Anspruch 6, worin die Lösung der Polyamidsäure mit hohem Molekulargewicht durch ein Verfahren chemisch imidisiert wird, welches das Zugeben einer Lösung von Essigsäureanhydrid und Pyridin in einem organischen Lösungsmittel zu der Lösung der Polyamidsäure mit hohem Molekulargewicht umfaßt.

8. Verfahren nach Anspruch 6, worin das Lösungsmittel, welches zum Auflösen des Polyimids verwendet wird, ausgewählt ist aus der Gruppe bestehend aus:
N,N-Dimethylacetamid,
N,N-Dimethylformamid,
N-Methyl-2-pyrrolidon,
Dimethylsulfoxid,
chlorierten Lösungsmitteln,
Tetrahydrofuran,
m-Kresol,
Methylethylketon,
Methylisobutylketon, und
Bis(2-methoxyethyl)ether.

9. Verfahren nach Anspruch 6, worin der Polyimidniederschlag mit frisch destilliertem Wasser vermischt und gewaschen wird und bei 60°C und 2 Stunden lang bei 200°C gründlich getrocknet wird, bevor er in einem Lösungsmittel aufgelöst wird.

10. Hochtemperaturbeständiges isolierendes aromatisches Polyimid mit einer Dielektrizitätskonstante im Bereich von 2,4 bis 3,2, welches durch das Verfahren nach Anspruch 1 hergestellt wird.

11. Polyimidfilm nach Anspruch 10, welcher seine isolierenden Eigenschaften nicht verliert, wenn er großen Feuchtigkeitsänderungen ausgesetzt ist.

12. Wenig dielektrisches Polymer, umfassend ein lineares aromatisches Polyimid, welches als Reaktionsprodukt von 2,2-Bis(3,4-dicarboxyphenyl)hexafluorpropan-dianhydrid mit dem aromatischen Diamin 2,2-Bis(4(3-aminophenoxy)phenyl)hexafluorpropan gebildet wird.

## Revendications

1. Procédé pour préparer un film de polyimide linéaire aromatique stable à haute température, faiblement diélectrique, ce procédé consistant :
a) à faire réagir chimiquement des quantités équimolaires d'un réactif diamine aromatique et d'un réactif dianhydride aromatique dans un milieu solvant pour former une solution d'acide polyamique de haut poids moléculaire ;
b) à minimiser les interactions électroniques entre les chaînes polymères de l'acide polyamique de haut poids moléculaire par des moyens choisis dans le groupe consistant :
i) à incorporer des groupes séparateurs ou de liaison choisis dans le groupe constitué par les groupes éthers, sulfures et carbonyles au moins dans l'un des réactifs diamine aromatique ou dianhydride aromatique avant de les employer dans ledit procédé,
ii) à produire des déformations physiques ou une dissymétrie dans les chaînes polymères de l'acide polyamique de haut poids moléculaire en utilisant une diamine aromatique liée en méta en tant que réactif diamine aromatique, et
iii) à incorporer un groupe encombrant choisi dans le groupe constitué par -CF₃ et -SO₂ au moins dans l'un des réactifs diamine aromatique ou dianhydride aromatique avant de les employer dans ledit procédé, afin d'empêcher une interaction entre les chaînes du polymère ;
c) à incorporer un ou plusieurs atomes de fluor dans les deux réactifs diamine aromatique et dianhydride aromatique, sous la forme de groupes -CF₃ ou -C(CF₃)₂ ou les deux, avant de les employer dans le présent procédé ;
d) à préparer un film de la solution polyamique de haut poids moléculaire résultante ou une solution du polyimide correspondant dans un solvant ; et
e) à thermodurcir le film à une température jusqu'à environ 300 °C pendant au moins une heure pour éliminer le solvant et donner un film de polyimide linéaire aromatique haute température, faiblement diélectrique.

2. Procédé selon la revendication 1, dans lequel la solution d'acide polyamique de haut poids moléculaire est appliquée sur une surface, et la couche de film appliquée est thermodurcie dans la gamme de température de 250 °C à 300 °C pendant au moins une heure.

3. Procédé selon la revendication 1, dans lequel la diamine aromatique est choisie dans le groupe constitué par :
le 2,2-bis(4(3-aminophénoxy)phényl)hexafluoropropane,
le 2,2-bis(4(4-aminophénoxy)phényl)hexafluoropropane,
le 2,2-bis(4-aminophényl)hexafluoropropane, et
le 2,2-bis(3-aminophényl)hexafluoropropane.

4. Procédé selon la revendication 1, dans lequel le dianhydride aromatique est le 2,2-bis(3,4-dicarboxylphényl)hexafluoropropane dianhydride.

5. Procédé selon la revendication 1, dans lequel le milieu solvant est choisi dans le groupe constitué par :
le N,N-diméthylacétamide,
le N,N-diméthylformamide,
la N-méthyl-2-pyrrolidone, et
le diméthylsulfoxyde.

6. Procédé selon la revendication 1, dans lequel :
la solution d'acide polyamique de haut poids moléculaire résultante est chimiquement imidée pour former un précipité du polyimide correspondant ;
le polyimide correspondant est ensuite dissous dans un solvant et une couche de film préparée à partir de la solution du polyimide dans le solvant est appliquée sur une surface ; et
la couche de film est ensuite chauffée à une gamme de température de 20 °C à 300 °C pour éliminer le solvant et produire un film de polyimide stable à haute température, faiblement diélectrique.

7. Procédé selon la revendication 6, dans lequel la solution d'acide polyamique de haut poids moléculaire est chimiquement imidée par un procédé qui comprend l'addition d'une solution d'anhydride acétique et de pyridine dans un solvant organique à la solution d'acide polyamique de haut poids moléculaire.

8. Procédé selon la revendication 6, dans lequel le solvant employé pour dissoudre le polyimide est choisi dans le groupe constitué par :
le N,N-diméthylacétamide,
le N,N-diméthylformamide,
la N-méthyl-2-pyrrolidone,
le diméthylsulfoxyde,
les solvants chlorés,
le tétrahydrofuranne,
le m-crésol,
la méthyléthylcétone,
la méthylisobutylcétone, et
l'éther bis(2-méthoxyéthylique).

9. Procédé selon la revendication 6, dans lequel le précipité de polyimide est homogénéisé par lavage dans de l'eau fraîchement distillée et parfaitement séché à 60 °C et pendant 2 heures à 200 °C avant d'être dissous dans un solvant.

10. Polyimide aromatique isolant, stable à haute température, ayant une constante diélectrique dans la gamme de 2,4 à 3,2, qui est produit par le procédé selon la revendication 1.

11. Film de polyimide selon la revendication 10, qui ne perd pas ses propriétés isolantes lorsqu'il est soumis à de grands changements d'humidité.

12. Polymère faiblement diélectrique comprenant un polyimide linéaire aromatique formé en tant que produit de réaction de 2,2-bis(3,4-dicarboxyphényl)hexafluoropropane dianhydride, avec la diamine aromatique 2,2-bis(4(3-aminophénoxy)phényl)hexafluoropropane.
